# EUROPÄISCHE PATENTSCHRIFT

(11) **EP 2 180 180 B1**
(45) Veröffentlichungstag und Bekanntmachung des Hinweises auf die Patenterteilung: **30.03.2016**
(21) Anmeldenummer: 10154694.3
(22) Anmeldetag: 20.01.2004
(51) Int. Cl.: F03D 1/00, F03D 1/06

(54) **Rotorblatt für eine Windenergieanlage mit Durchgangslöchern zur Handhabung**
Wind turbine blade with through holes for handling
Aube d'une éolienne avec des trous débouchants de manutention

(30) Priorität: 10.02.2003 DE 10305543
(43) Veröffentlichungstag der Anmeldung: 28.04.2010
(62) Teilanmeldung aus: 04703365.9
(73) Patentinhaber: Wobben Properties GmbH, 26607 Aurich (DE)
(72) Erfinder:
(74) Vertreter: Eisenführ Speiser

(56) Entgegenhaltungen:
- EP-A2- 1 101 936
- DE-A1- 10 200 401
- DE-A1- 10 225 025
- GB-A- 452 611
- JP-A- H02 112 700
- US-A- 5 401 138
- US-B1- 6 364 609

## Beschreibung

Die vorliegende Erfindung betrifft ein Rotorblatt für eine Windenergieanlage.

Rotorblätter für Windenergieanlagen sind allgemein bekannt. Mit zunehmender Größe der Windenergieanlagen und ansteigender Leistung nimmt auch die Größe der Rotorblätter sowie deren Eigengewicht zu. Zur Montage der Komponenten sind deshalb Kräne erforderlich, die Lasten mit höherem Eigengewicht in größere Höhen transportieren können. Demnach werden auch die benötigten Kräne größer.

Aufgabe der Erfindung ist es, die Montage der Rotorblätter zu vereinfachen sowie die Handhabbarkeit der Rotorblätter zu verbessern.

Die Aufgabe der Erfindung wird durch ein Rotorblatt nach Anspruch 1 gelöst.

Ein Verfahren zur Montage von Rotorblättern an einer Rotornabe, welche mit einer Gondel einer Windenergieanlage verbunden ist, erfolgt durch Drehen der Rotornabe in eine vorgegebene erste Position, Anbringen eines Rotorblattes, Drehen der Rotornabe mit Hilfe des Rotorblattes in eine vorgegebene zweite Position, wobei die Drehung der Rotornabe in Richtung der Schwerkraftwirkung des bereits montierten ersten Rotorblattes erfolgt.

Somit kann auch bei der Montage von Rotorblättern an Windenergieanlagen mit einer relativ großen Nabenhöhe ein Kran verwendet werden, der auch zur Montage der Rotornabe selbst bzw. der Gondel ausreicht.

In einer Weiterbildung des Verfahrens wird die Gondel um 180 Grad gedreht, bevor das zweite Rotorblatt angebracht wird. Diese Vorgehensweise gestattet die Montage des zweiten Rotorblattes, ohne dass der Kran seinen Standort verändern muss, da sich durch die Drehung der Gondel die Anbauposition des Rotorblattes wiederum an der Seite der Windenergieanlage befindet, an welcher der Kran aufgebaut ist.

In einer weiteren Weiterbildung des Verfahrens wird die Rotornabe mit Hilfe des zweiten Rotorblattes in eine weitere vorgegebene Position gedreht, die Gondel erneut um 180 Grad gedreht und ein drittes Rotorblatt 23 angebracht.

Auch diese Montage des dritten Rotorblattes ist ohne eine Änderung des Standortes des Kranes möglich und durch die Einsparung der aufwändigen Standortwechsel des Kranes lassen sich die Rotorblätter zeitsparend anbringen.

Um die Drehung der Nabe auf besonders einfache und wirkungsvolle Weise zu unterstützen, kann der Kran an dem Rotorblatt und insbesondere an einem Durchgangsloch des Rotorblattes angreifen und somit die Drehung des Rotorblattes in Richtung der Schwerkraft durch eine entgegengesetzt gerichtete Kraft verzögern. Dadurch kann die Drehung auf einfache Weise sicher kontrolliert und beeinflusst werden.

Um die Handhabbarkeit des Rotorblattes zu verbessern, weist das Rotorblatt Durchgangslöcher in dem Rotorblatt an einer vorgegebenen Position auf. Dies hat insbesondere den Vorteil, dass Handhabungsmittel, welche durch das Rotorblatt hindurch greifen können, in der Anwendung schneller und sicherer sind als die bekannte Handhabung mit Gurten und Zurrseilen.

Die Durchgangslöcher verlaufen zwischen der Saugseite und der Druckseite des Rotorblattes und erlauben so die Handhabung des Rotorblattes in einer im Wesentlichen horizontalen Lage, die mit der Fahnenstellung vergleichbar ist. Dabei bietet das Rotorblatt die geringstmögliche Angriffsfläche für den Wind und ist damit natürlich auch dessen Einfluss in geringstmöglichem Umfang ausgesetzt.

In einer bevorzugten Ausführungsform weist das Rotorblatt ein im Wesentlichen senkrecht zur Rotorblattlängsachse verlaufendes Durchgangsloch auf. Dadurch kann entsprechend der Ausrichtung des Durchgangsloches in dem Rotorblatt dieses Rotorblatt in einer im Wesentlichen horizontalen Lage oder in einer im Wesentlichen vertikalen Lage gehandhabt werden.

In einer besonders bevorzugten Weiterbildung der Erfindung weist das Rotorblatt an wenigstens einer vorgegebenen Position der Rotorblattlängsachse zwei sich kreuzende und senkrecht zur Rotorblattlängsachse verlaufende Durchgangslöcher auf, die eine flexible Handhabung des Rotorblattes abhängig von z. B. örtlichen Gegebenheiten erlauben.

Weitere vorteilhafte Ausführungsformen sind in den Unteransprüchen angegeben.

Im Folgenden wird die Erfindung anhand der Figuren näher beschrieben. Dabei zeigen:
- Fig. 1: eine Seitenansicht einer ersten Ausführungsform eines erfindungsgemäßen Rotorblattes;
- Fig. 2: eine Seitenansicht eines Rotorblattes, welches nicht Teil des Erfindung ist;
- Fig. 3: eine vereinfachte Querschnitts-Darstellung eines Rotorblatt-Abschnittes mit einem Durchgangsloch;
- Fig. 4: eine vereinfachte Querschnitts-Darstellung eines erfindungsgemäßen Rotorblatt-Abschnittes mit einer alternativen Ausführungsform des Durchgangsloches;
- Fig. 5: die Ausgangssituation bei dem Verfahren zur Montage des Rotorblattes;
- Fig. 6: den ersten Schritt des Verfahrens;
- Fig. 7: den zweiten Schritt des Verfahrens;
- Fig. 8: den dritten Schritt des Verfahrens;
- Fig. 9: den vierten Schritt des Verfahrens;
- Fig. 10: den fünften Schritt des Verfahrens;
- Fig. 11: den sechsten Schritt des Verfahrens;
- Fig. 12: den siebten Schritt des Verfahrens; und
- Fig. 13: den achten Schritt des Verfahrens.

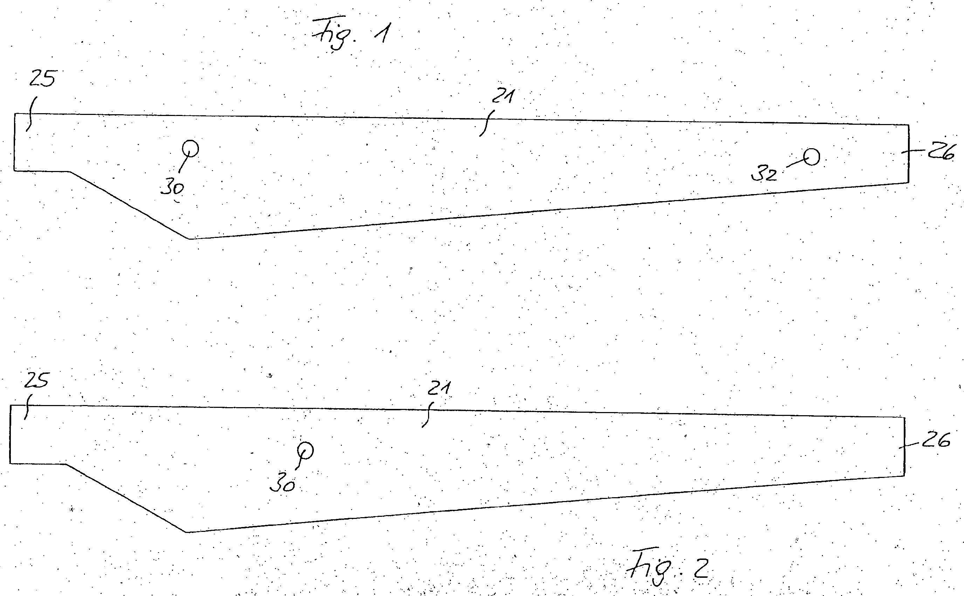

In der Draufsicht in Fig. 1 ist eine vereinfachte Darstellung des Rotorblattes 21 gezeigt. Dieses Rotorblatt 21 weist in seiner Längsrichtung zwischen der Rotorblattwurzel 25 und der Rotorblattspitze 26 zwei Durchgangslöcher 30, 32 auf. Das Durchgangsloch 32 ist im Bereich der Rotorblattspitze 26 ausgebildet, während das Durchgangsloch 30 sich im rotorblattwurzelnahen Bereich befindet. Dabei sind diese Positionen so festgelegt, dass eine sichere Handhabung des Rotorblattes bei seiner Montage an einer Rotornabe einer Windenergieanlage gewährleistet ist. Die Festlegung der Position für die Löcher 30, 32 erfolgt unter Berücksichtigung einer Verbindung zu der tragenden Struktur des Rotorblattes 21.

Fig. 2 zeigt ein Rotorblatt 21, welches nicht Teil des Erfindung ist, mit nur einem Durchgangsloch 30. Dieses einzelne Durchgangsloch 30 ist in sinnvoller Weise im Schwerpunkt des Rotorblattes angeordnet, so dass auch mit einem Handhabungsmittel das Rotorblatt sicher handhabbar ist. Auch hier wird natürlich eine Verbindung mit der tragenden Struktur berücksichtigt.

Weitere Ausführungsformen mit mehr als zwei Durchgangslöchern sind ebenfalls möglich.

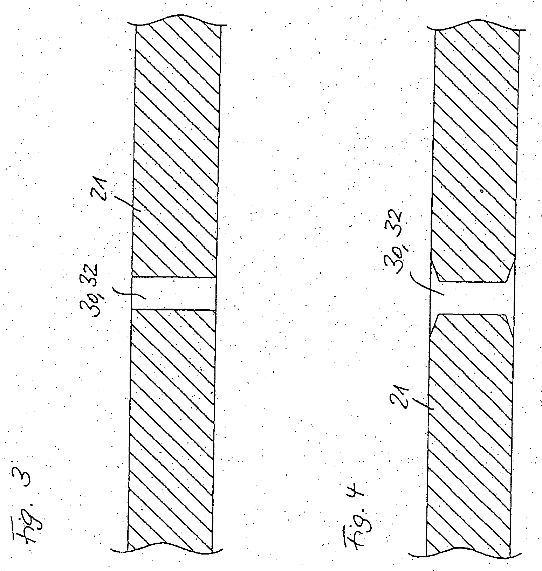

In den Figuren 3 und 4 sind beispielhaft alternative Ausführungsformen der Durchgangslöcher gezeigt.

In Fig. 3 ist ein zylindrisches Durchgangsloch 30, 32 dargestellt, welches durch geeignete Abdeckungen verschlossen werden kann.

Fig. 4 zeigt ein Durchgangsloch 30, 32, welches in einem mittleren Abschnitt ebenfalls zylindrisch ist, wobei sich die den Oberflächen des Rotorblattes 21 benachbarten Endabschnitte des Durchgangsloches 30, 32 aber verbreitern. Diese Verbreiterung gestattet ein verbessertes Anbringen von Abdeckungen, die das Durchgangsloch 30, 32 verschließen um einerseits das Eindringen von Schmutz und Feuchtigkeit zu verhindern und andererseits eine Beeinflussung der Strömung am Rotorblatt durch das Loch zu unterbinden, indem sie sich bündig in die Oberfläche einfügen. Dabei kommen zur Befestigung einer solchen (nicht dargestellten) Abdeckung unterschiedliche, an sich bekannte Möglichkeiten, in Betracht, wie z. B. eine Hinterschneidung, Gewinde, etc.

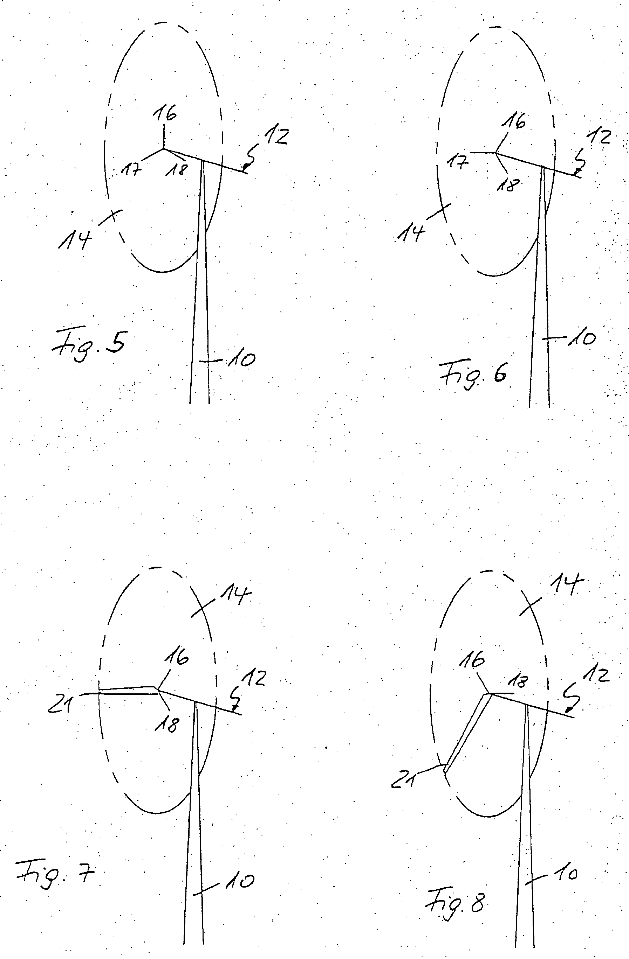

In Fig. 5 ist die Ausgangssituation des Verfahrens zum Anbringen von Rotorblättern an der Rotornabe einer Windenergieanlage dargestellt. Dabei werden vorzugsweise Rotorblätter mit Durchgangslöchern, wie in Fig. 1 und 2 dargestellt, verwendet. In dieser und den folgenden Figuren 5-13 sind die zur Erläuterung erforderlichen Komponenten stark vereinfacht dargestellt. Dabei bezeichnet das Bezugszeichen 10 den Turm einer Windenergieanlage, 12 weist auf die Ausrichtung der Gondel hin, 14 stellt den Rotorkreis dar, 16, 17 und 18 geben die Orientierung der Rotorblattanschlüsse an und 21, 22 und 23 bezeichnen angebaute Rotorblätter.

Zur Montage der Rotorblätter an der Rotornabe der Gondel einer Windenergieanlage werden Handhabungsmittel in den Durchgangslöchern 30, 32 befestigt, um mit ihnen sowie mit Hilfe eines Kranes die Rotorblätter sicher nach oben zur Rotornabe befördern zu können. Da die Durchgangslöcher zwischen der Saug- und der Druckseite des Rotorblattes verlaufen, können die Rotorblätter in einer horizontalen Lage sicher gehandhabt werden. Das Vorsehen der oben beschriebenen Durchgangslöcher in den Rotorblättern vereinfacht das nachfolgend beschriebene Verfahren zur Montage dieser Rotorblätter erheblich.

In Fig. 5 befindet sich der Rotorkreis 14 in der Betrachtungsrichtung hinter dem Turm 10 der Windenergieanlage und die Rotorblattanschlüsse 16, 17, 18 befinden sich in den Positionen 12 Uhr, 4 Uhr und 8 Uhr.

In dem ersten Verfahrensschritt wird nun die Rotornabe in eine vorgegebene Position gebracht. Diese ist in Fig. 6 dargestellt. Wesentlich ist dabei, dass der Rotorblattanschluss 17 jetzt in der 9-Uhr-Position ist. Entsprechend befindet sich jetzt der Rotorblattanschluss 16 in der 1-Uhr-Position und der Rotorblattanschluss 18 in der 5-Uhr-Position.

Durch die so erreichte Ausrichtung des Rotorblattanschlusses 17 ist es möglich, ein Rotorblatt 21 in einer horizontalen Ausrichtung an diesem Rotorblattanschluss anzubringen. Dazu wird die Rotornabe in der gewünschten Position arretiert. Diese Arretierung wird für die weitere Beschreibung vorausgesetzt und nicht mehr explizit erwähnt.

Die Situation nach der Montage des ersten Rotorblattes 21 ist in Fig. 7 gezeigt. Dort ist das Rotorblatt 21 in der 9-Uhr-Position, während sich die Rotorblattanschlüsse 16 und 18 in der 1-Uhr- bzw. 5-Uhr-Position befinden.

Der nächste Verfahrensschritt ist in Fig. 8 dargestellt. Dort ist das Rotorblatt 21 in die 7-Uhr-Position abgesenkt. Dieses Absenken kann durch Schwerkraftwirkung erfolgen. Gleichzeitig kann der (nicht dargestellte) Kran, der das Rotorblatt 21 in die Montageposition gehoben hat, der Drehung entgegenwirken und so eine kontrollierte Drehung erzwingen.

Weiterhin ist in dieser Figur erkennbar, dass der Rotorblattanschluss 18 jetzt in der 3-Uhr-Position ist und der Rotorblattanschluss 16 befindet sich in der 11-Uhr-Position.

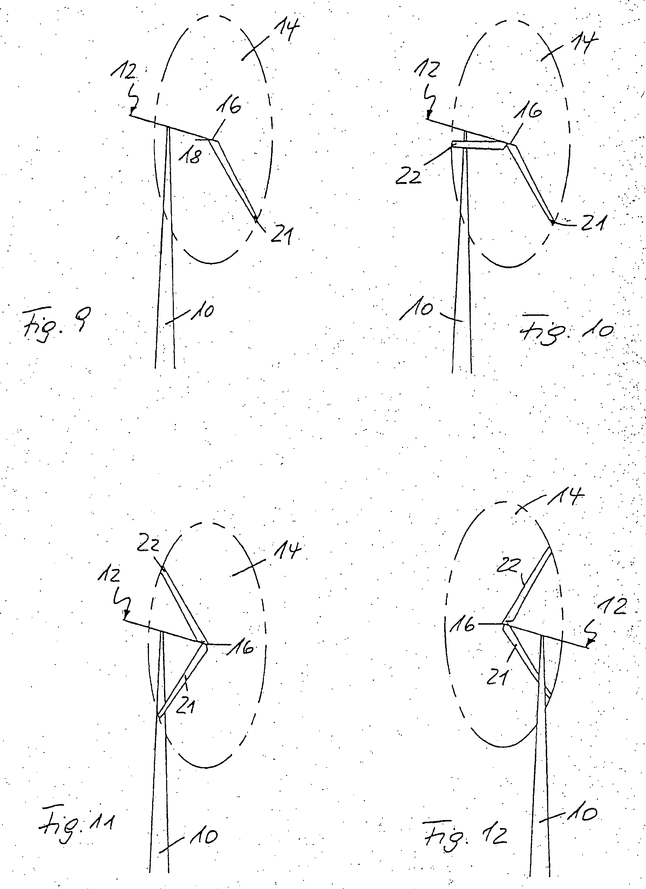

Fig. 9 verdeutlicht, dass bei unveränderter Position der Rotornabe die Gondel um 180 Grad gedreht wurde, so dass sich der Rotorkreis 14 in Betrachtungsrichtung vor dem Turm 10 befindet. Durch diese Drehung der Gondel befindet sich das Rotorblatt 21 jetzt in der 5-Uhr-Position, der Rotorblattanschluss 16 in der 1-Uhr-Position und der Rotorblattanschluss 18 in der 9-Uhr-Position. Damit kann an diesen Rotorblattanschluss 18 jetzt ein in horizontaler Lage vom Kran angehobenes weiteres Rotorblatt angebracht werden, ohne dass der Kran seinen Standort verändern muss.

Die sich dann ergebende Situation ist in Fig. 10 dargestellt. Dort befindet sich der Rotorblattanschluss 16 noch in der 1-Uhr-Position, das erste Rotorblatt 21 in der 5-Uhr-Position, während das zweite Rotorblatt 22 jetzt in der 9-Uhr-Position dargestellt ist.

Zur Vorbereitung der Montage des dritten Rotorblattes wird dann, wie in Fig. 11 dargestellt, das Rotorblatt 21 mit Hilfe des Kranes aus der 5-Uhr-Position in die 7-Uhr-Position verschwenkt. Dadurch gelangt das zweite Rotorblatt 22 in die 11-Uhr-Position und der Rotorblattanschluss 16 gelangt in die 3-Uhr-Position. Daran anschließend wird die Gondel wiederum um 180 Grad gedreht.

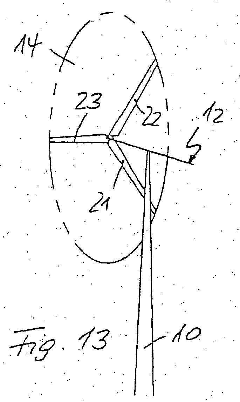

Das Ergebnis dieser Drehung ist in Fig. 12 dargestellt. Aus der Sicht des Betrachters befindet sich der Rotorkreis 14 jetzt wieder hinter dem Turm 10. Dadurch ist bei unveränderter Stellung der Rotornabe das erste Rotorblatt 21 in der 5-Uhr-Position, das zweite Rotorblatt 22 befindet sich in der 1-Uhr-Position und der Rotorblattanschluss 16 befindet sich in der 9-Uhr-Position. Somit kann wieder ohne einen Standortwechsel des Kranes ein drittes Rotorblatt an diesem Rotorblattanschluss 16 angebracht werden. Dies ist in der Fig. 13 gezeigt. Das erste Rotorblatt 21 befindet sich in der 5-Uhr-Position, das zweite Rotorblatt 22 in der 1-Uhr-Position und das dritte Rotorblatt 23 in der 9-Uhr-Position. Damit ist das Verfahren beendet und alle drei Rotorblätter sind an der Windenergieanlage angebracht worden.

## Patentansprüche

1. Windenergieanlagen-Rotorblatt einer Windenergieanlage mit einem Turm (10) und einer Gondel (12), mit
einem ersten Durchgangsloch (32) zur Aufnahme von Handhabungsmitteln im Bereich der Rotorblattspitze (26) und einem zweiten Durchgangsloch (30) zur Aufnahme von Handhabungsmitteln im Rotorblattwurzel-nahen Bereich,
wobei das erste und zweite Durchgangsloch zwischen der Saugseite und der Druckseite des Rotorblattes (21, 22, 23) vorgesehen ist.

2. Rotorblatt nach Anspruch 1,
wobei die Position des ersten und zweiten Durchgangsloches (30, 32) eine Verbindung zu einer tragenden Struktur des Rotorblattes (21) aufweist.

3. Rotorblatt nach einem der Ansprüche 1 bis 2, ferner mit
einer lösbaren Abdeckung zum Verschließen der Durchgangslöcher (30, 32).

4. Rotorblatt nach einem der Ansprüche 1 bis 3, wobei das Rotorblatt dazu ausgestaltet ist, an einer Rotornabe der Gondel (12) befestigt zu werden.

## Claims

1. Wind turbine rotor blade of a wind turbine having a tower (10) and a pod (12), having
a first through-hole (32) for receiving handling means in the region of the rotor blade tip (26) and a second through-hole (30) for receiving handling means in the region close to the rotor blade root,
wherein the first and second through-holes are provided between the intake side and the pressure side of the rotor blade (21, 22, 23).

2. Rotor blade according to claim 1,
wherein the position of the first and second through-holes (20, 32) has a connection to a carrying structure of the rotor blade (21).

3. Rotor blade according to any one of claims 1 to 2, further having a releasable cover for closing the through-holes (30, 32).

4. Rotor blade according to any one of claims 1 to 3, wherein the rotor blade is constructed to be secured to a rotor hub of the pod (12).

## Revendications

1. Pale de rotor d'une éolienne avec une tour (10) et une nacelle (12), avec
un premier trou de passage (32) pour la réception de moyens de manipulation dans la zone de la pointe de la pale de rotor (26) et un second trou de passage (30) pour la réception de moyens de manipulation dans la zone proche de la base de la pale de rotor,
le premier et second trou de passage étant prévus entre le côté d'aspiration et le côté de refoulement de la pale de rotor (21, 22, 23).

2. Pale de rotor selon la revendication 1,
la position du premier et second trous de passage (30, 32) présentant une liaison avec une structure porteuse de la pale de rotor (21).

3. Pale de rotor selon l'une quelconque des revendications 1 à 2, de plus avec un recouvrement détachable pour la fermeture des trous de passage (30, 32).

4. Pale de rotor selon l'une quelconque des revendications 1 à 3, la pale de rotor étant configurée afin d'être fixée sur un moyeu de rotor de la nacelle (12).
